# EUROPEAN PATENT APPLICATION

(11) **EP 3 614 013 A1**
(43) Date of publication of application: **26.02.2020**
(21) Application number: 19154451.9
(22) Date of filing: 30.01.2019
(51) Int. Cl.: F16F 9/36, F16J 15/00, F16F 9/084

(54) **TOP MOUNT SEAL PACK ASSEMBLY FOR AIR SHOCK**

(30) Priority: 23.08.2018 US 201862721793 P; 24.01.2019 US 201916256692
(71) Applicant: Arnott T&P Holding, LLC, Merritt Island FL 32953 (US)
(72) Inventor: Kirar, Matt Edward, Merritt Island, FL 32953 (US)
(74) Representative: MacLachlan & Donaldson

(57) **Abstract**

Assemblies, systems, devices, and methods for disassembling an original equipment manufacturer (OEM) air shock/air spring and reassembling and inexpensively remanufacturing the air shock/air spring with a novel seal pack in the top mount. The novel seal pack keeps compressed air from leaking from the air shock/air spring and allows the damper rod to move axially and rotationally and shift side to side in the top mount. The seal pack can include a seal pack with an outer groove, a seal pack X-ring for fitting inside of the seal pack, and an O-ring for fitting into the outer groove of the seal pack.

## Description

### CROSS REFERENCE TO RELATED APPLICATIONS

This application claims the benefit of priority to U.S. Provisional Patent Application Serial No. 62/721,793 filed August 23, 2018, which is incorporated by reference in its' entirety.

### FIELD OF INVENTION

This invention relates to air shocks for automobile type vehicles, and in particular to assemblies, systems, devices, and methods for disassembling an original equipment manufacturer (OEM) air shock/air spring and reassembling and inexpensively remanufacturing the air shock/air spring with a seal pack in the top mount that keeps compressed air from leaking from the air shock/air spring and allows the damper rod to move axially and rotationally in the top mount, and functions as an effective high quality and good reliability OEM replacement air shock/air spring.

### BACKGROUND AND PRIOR ART

Original Equipment Manufacturer (OEM) parts such as air shocks and air springs have parts that wear out over time, and can be very expensive to be replaced. For example, an Audi A8/S8 air spring can be a very expensive part to be replaced. Vehicle owners typically have to buy Audi parts that can be very expensive in the several hundreds of dollars or more for an OEM part. While there are cheap knock-offs available, the problem is the quality and reliability of the knock-off products.

FIG. 1 is an upper front right perspective view of an original equipment manufacturer (OEM) prior art air shock/air spring 220. FIG. 2A is a top view of the OEM prior art air shock/air spring 220 of FIG. 1.

FIG. 2B is a cross sectional view of the OEM prior art air shock/air spring 220 of FIG. 2A along arrows 2B. FIG. 2C is an enlarged view of a portion of the cross-sectional view of the prior art air shock/air spring 220 of FIG. 2B. FIG. 2D is an enlarged view of a portion of the air shock/air spring of FIG. 2C.

FIG. 3A is an exploded perspective view of the prior art air shock/air spring 220 of the preceding figures. FIG. 3B is a cross sectional view of the prior art air shock/air spring 220 of FIG. 3A along arrows 3B.

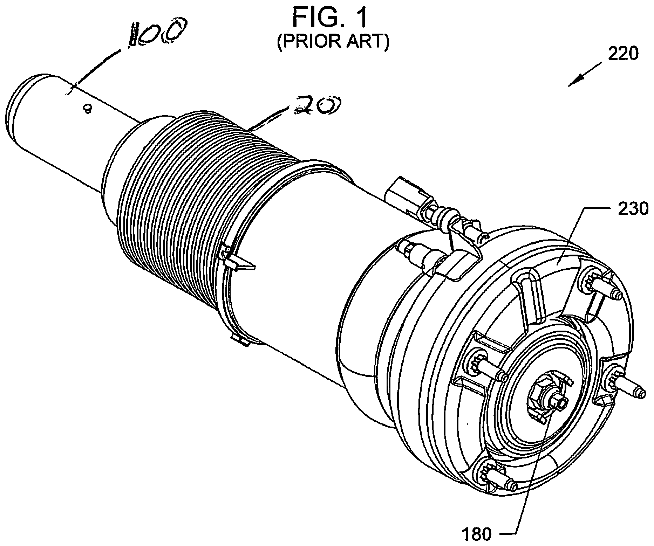

Referring to FIGURES 1-3B, the prior art OEM (original equipment manufacturer) air shock/air spring 220 can include a shock absorber 100 with an upwardly protruding shock absorber shaft 110 and an air spring sub assembly 20 with a bladder. On the opposite end of the shock absorber 100 can be an OEM air spring head 230 having a shock shaft nut 180 that secures the shock absorber shaft 110 to a metal component 140 at the top of the mount isolator 120. Component 140 is a steel component//metal center piece of the top mount isolator 120.

Top mount isolator 120 can include a metal center piece 140 that mounts to the shock shaft 110 and a rubber over-molded component 130 that rests in the retainer cup 160 in the air spring head 230. The rubber component 130 is able to flex which gives some freedom of movement to the shock shaft 110 which is bolted to the center metal part 140 which is bonded to the rubber 130 to make one part 120. The rubber 130 can be compressed so the metal center piece 140 and the shock shaft 110 can have some movement. The diaphragm 240 is flexible as well so it can allow this movement but at the same time keep a seal between the air spring head 230 and the shock shaft 110.

Part 120 can be sandwiched between spring head 230 top mount retainer plate 150. Top mount retainer plate 150 can be held in place with the top mount retainer ring 170. The shock shaft 110 passes through the diaphragm 240 and inside diaphragm collar 280 secures 240 to the shaft 110. The diaphragm 240 can be captured between outside diaphragm collar 260 and top mount 230. Outside diaphragm collar 260 can be held in place 230 by the snap ring 270. The diaphragm is now secured to the top mount 230 and the shock shaft 110 to make an air tight seal.

The diaphragm 240 can dry out become brittle, crack and tear over time or while taking the air spring off the shock during the remanufacturing process, which can result to air leaks in these parts.

Thus, the need exists for solutions to the above problems with the prior art.

### SUMMARY OF THE INVENTION

A primary objective of the present invention is to provide assemblies, systems, devices, and methods for disassembling an original equipment manufacturer (OEM) air shock/air spring and reassembling and inexpensively remanufacturing the air shock/air spring with a seal pack in the top mount that keeps compressed air from leaking from the air shock/air spring and allows the damper rod to move axially and rotationally and side to side in the top mount

A secondary objective of the present invention is to provide assemblies, systems, devices, and methods for disassembling original equipment manufacturer (OEM) air shocks/air springs and re-assembling and remanufacturing the air shocks/air springs with a remanufactured air spring head having a seal pack that is less expensive and has similar quality to traditional OEM replacement air shocks/air springs.

A preferred embodiment of remanufactured air shock can include a top mount assembly having an outer end and an inner end, an air spring sub-assembly attached to the inner end of the top mount assembly, a shock absorber damper rod shaft having a lower end in the air spring sub-assembly and an upper end moveable within the top mount assembly, and a seal pack that keeps compressed air from leaking from the air shock while allowing the damper rod shaft to move axially and rotationally in the top mount assembly.

The seal pack can include a seal pack with an outer groove, a seal pack X-ring for fitting inside of the seal pack, and an O-ring for fitting into the outer groove of the seal pack.

A preferred method of remanufacturing an OEM (original equipment manufacturer) air shock, can include the steps of providing a top mount assembly having an outer end and an inner end, providing an air spring sub-assembly attached to the inner end of the top mount assembly, providing a shock absorber damper rod shaft having a lower end in the air spring sub-assembly and an upper end moveable within the top mount assembly, and keeping compressed air from leaking from the air shock while allowing the damper rod shaft to move in the top mount assembly.

The step of keeping the compressed air from leaking can include the step of providing a seal pack that keeps the compressed air from leaking from the air shock while allowing the damper rod shaft to move axially in the top mount assembly.

The step of keeping the compressed air from leaking can include the step of providing a seal pack that keeps the compressed air from leaking from the air shock while allowing the damper rod shaft to move rotationally in the top mount assembly.

The step of keeping the compressed air from leaking can include the step of providing a seal pack that keeps the compressed air from leaking from the air shock while allowing the damper rod shaft to shift side to side in the top mount assembly.

The step of keeping the compressed air from leaking can include the step of providing a seal pack that keeps the compressed air from leaking from the air shock while allowing the damper rod shaft to move while allowing the damper rod shaft to move axially in the top mount assembly, and while allowing the damper rod shaft to move rotationally in the top mount assembly, and while allowing the damper rod shaft to shift side to side in the top mount assembly.

The step of providing the seal pack can include the steps of providing a seal pack with an outer groove, providing a seal pack X-ring for fitting inside of the seal pack, and providing an O-ring for fitting into the outer groove of the seal pack.

The step of keeping compressed air from leaking from the air shock while allowing the damper rod shaft to move in the top mount assembly, can include the step of preventing compressed air from leaking from the air shock while allowing the damper rod shaft to move axially in the top mount assembly.

The step of keeping compressed air from leaking from the air shock while allowing the damper rod shaft to move in the top mount assembly, can include the step of preventing compressed air from leaking from the air shock while allowing the damper rod shaft to move rotationally in the top mount assembly.

The step of keeping compressed air from leaking from the air shock while allowing the damper rod shaft to move in the top mount assembly, can include the step of preventing compressed air from leaking from the air shock while allowing the damper rod shaft to shift side to side in the top mount assembly.

The step of keeping compressed air from leaking from the air shock while allowing the damper rod shaft to move in the top mount assembly, can include the step of preventing compressed air from leaking from the air shock while allowing the damper rod shaft to move axially in the top mount assembly, and while allowing the damper rod shaft to move rotationally in the top mount assembly, and while allowing the damper rod shaft to shift side to side in the top mount assembly.

The method can include the step of disassembling the OEM (original equipment manufacturer) air shock as a first step.

Further objects and advantages of this invention will be apparent from the following detailed description of the presently preferred embodiments which are illustrated schematically in the accompanying drawings.

### BRIEF DESCRIPTION OF THE FIGURES

The drawing figures depict one or more implementations in accord with the present concepts, by way of example only, not by way of limitations. In the figures, like reference numerals refer to the same or similar elements.
FIG. 1 is an upper front right perspective view of an original equipment manufacturer (OEM) prior art air shock/air spring.

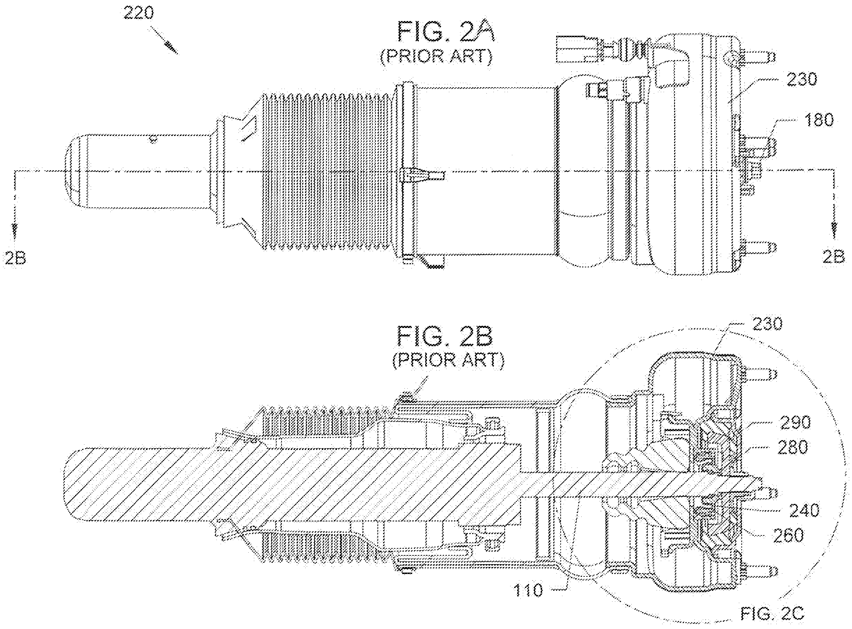

FIG. 2A is a top view of the OEM prior art air shock/air spring of FIG. 1.
FIG. 2B is a cross sectional view of the OEM prior art air shock/air spring of FIG. 2A along arrows 2B.

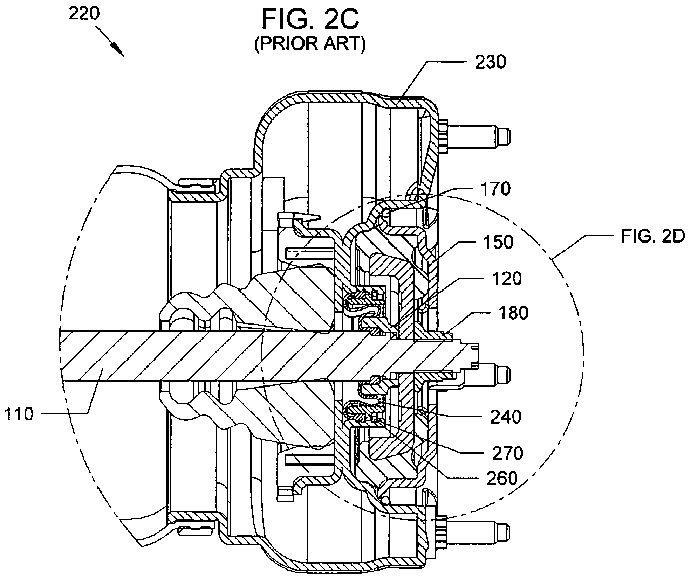

FIG. 2C is an enlarged view of a portion of the cross-sectional view of the prior art air shock/air spring of FIG. 2B.

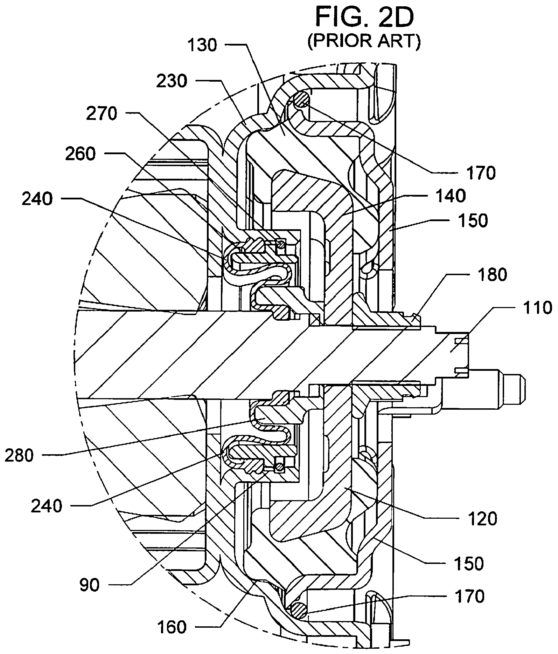

FIG. 2D is an enlarged view of a portion of the air shock/air spring of FIG. 2C.

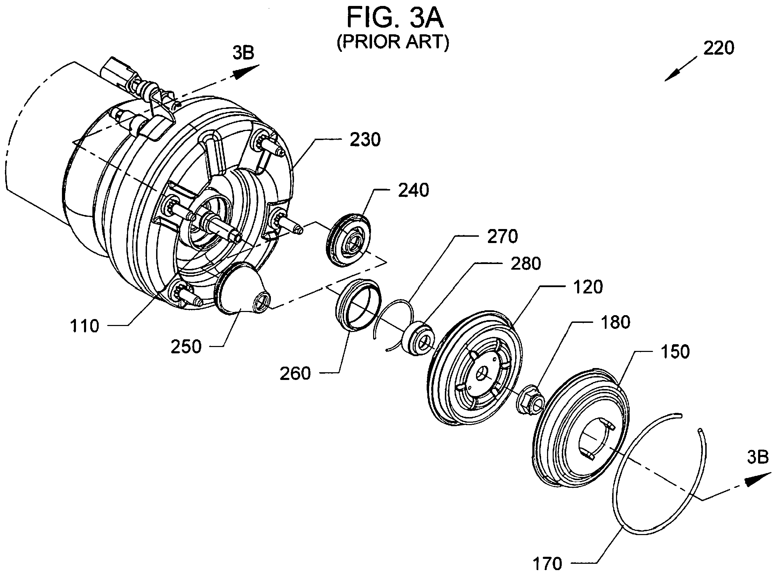

FIG. 3A is an exploded perspective view of the prior art air shock/air spring of the preceding figures.

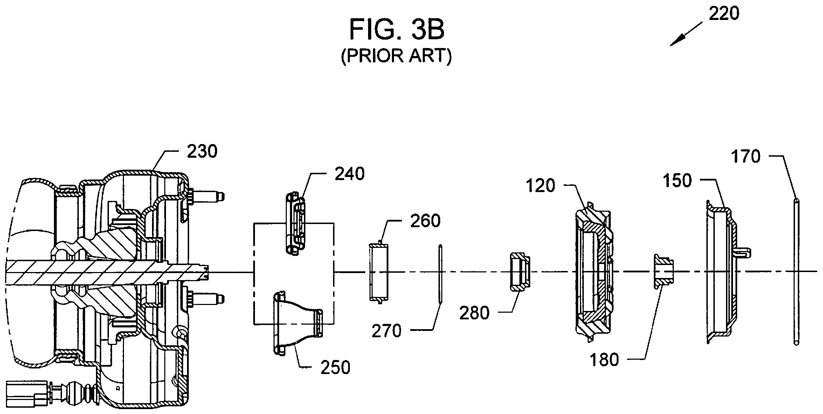

FIG. 3B is a cross sectional view of the prior art air shock/air spring of FIG. 3A along arrows 3B.

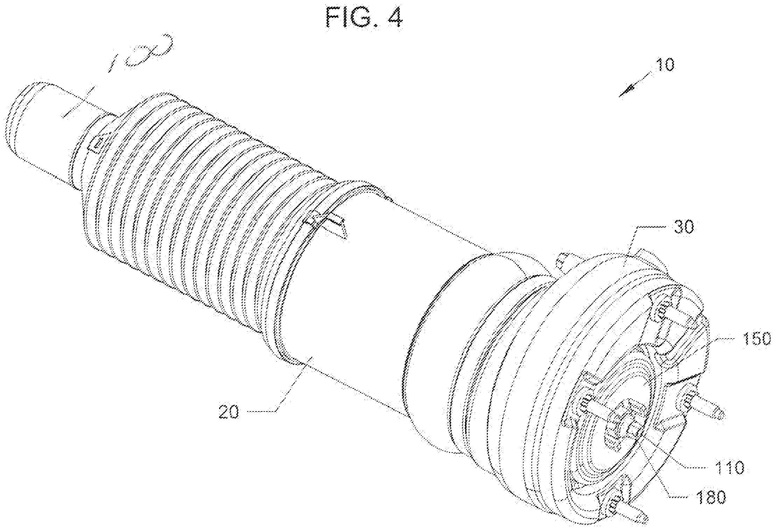

FIG. 4 is an upper front right perspective view of a remanufactured air shock/air spring assembly with a top mount rod pack.

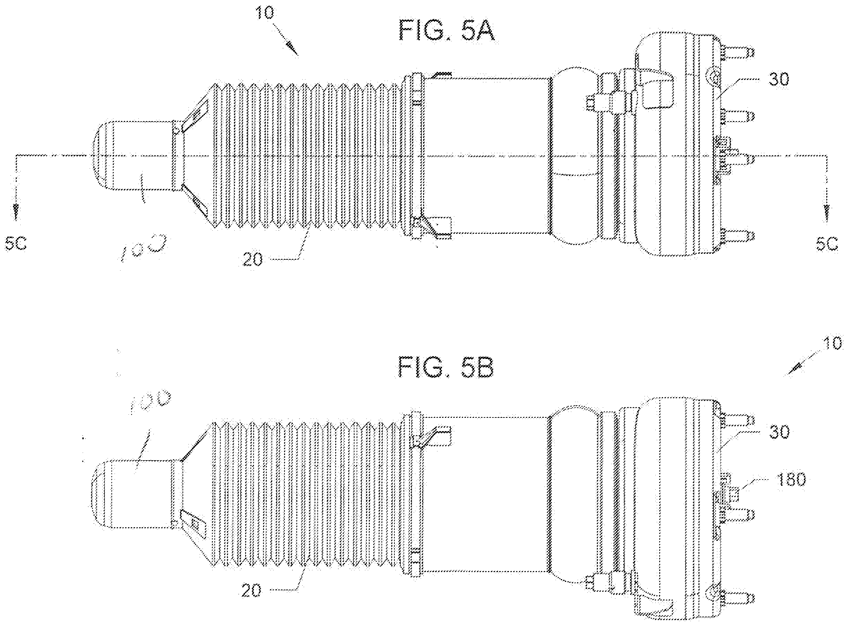

FIG. 5A is a top view of the air shock/air spring assembly of FIG. 4.
FIG. 5B is a front view of the air shock/air spring assembly of FIG. 4.

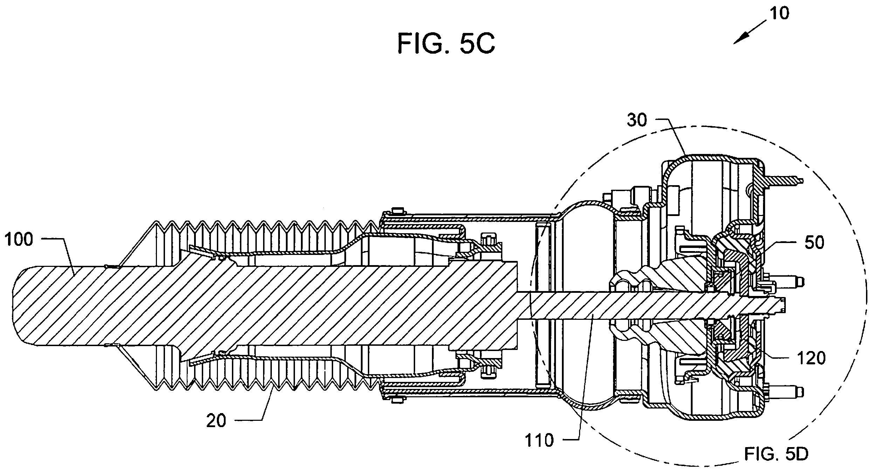

FIG. 5C is a cross sectional view of the air shock/air spring assembly of FIG. 5A along arrows 5C.

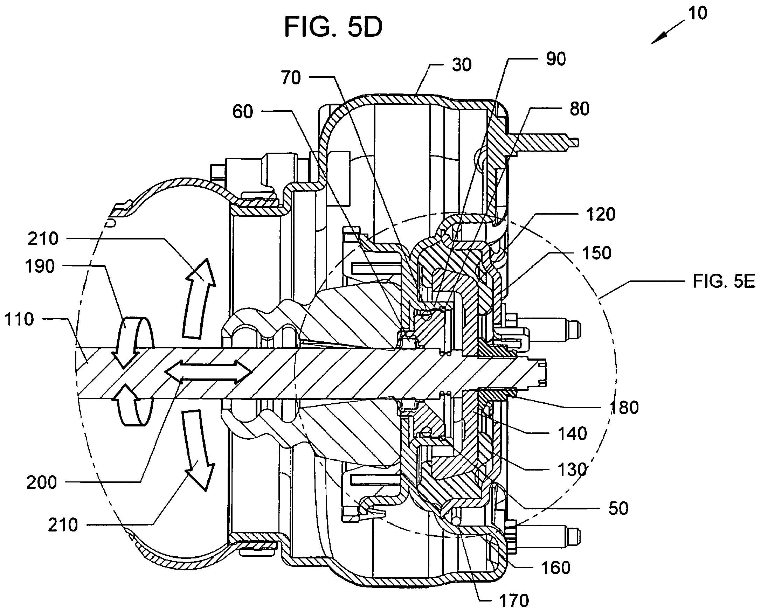

FIG. 5D is an enlarged view of a portion of the cross-sectional view of the air shock/air spring assembly of FIG. 5C.

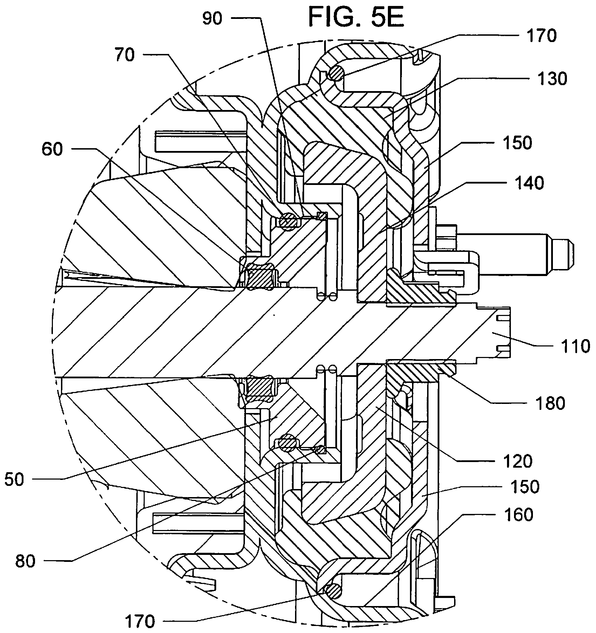

FIG. 5E is an enlarged view of a portion of the air shock/air spring assembly of FIG. 5D.

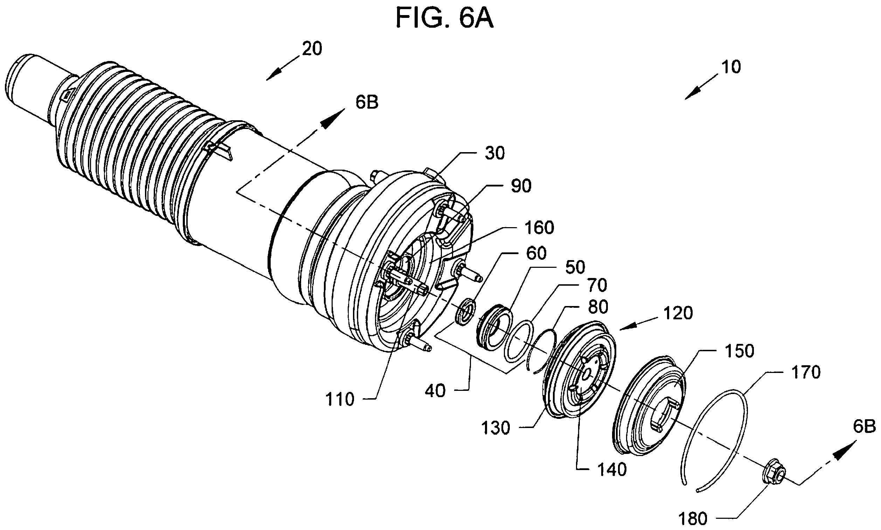

FIG. 6A is an exploded perspective view of the remanufactured air shock/air spring of FIGURES 4-5E.

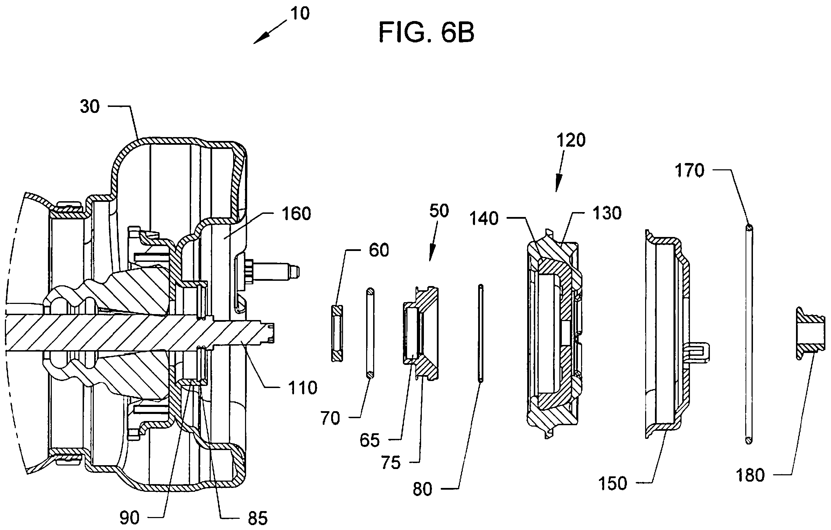

FIG. 6B is a cross sectional view of the cross-sectional view of the remanufactured air shock/air spring 10 of FIG. 6A along arrows 6B.

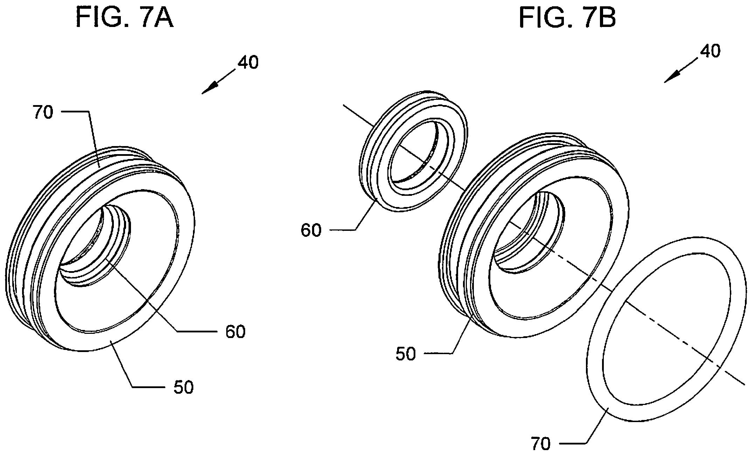

FIG. 7A is a perspective view of the seal pack assembly used in FIGURES 4-5E.
FIG. 7B is an exploded perspective view of the seal pack assembly of FIG. 7A.

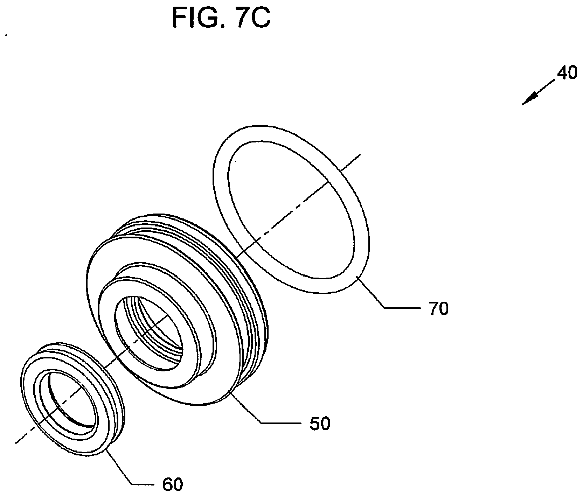

FIG. 7C is another exploded perspective view of the seal pack assembly of FIG. 7A.

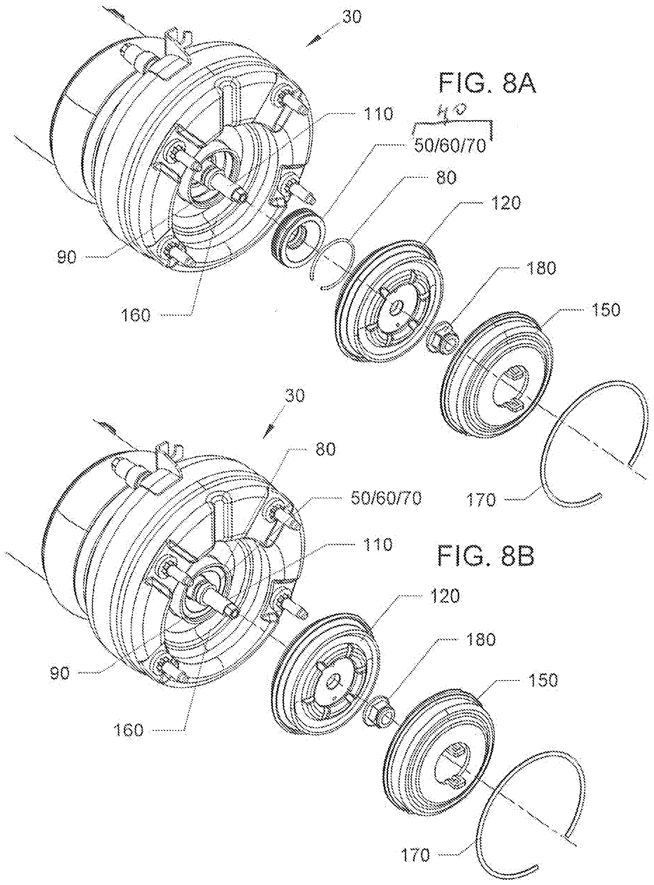

FIG. 8A is a perspective exploded view of the main parts of air spring head in the remanufactured air shock/air spring ready to be assembled.
FIG. 8B is a partially assembled perspective view of the main parts of the spring head of FIG. 8A with the seal pack assembly 40 in the top mount isolator.

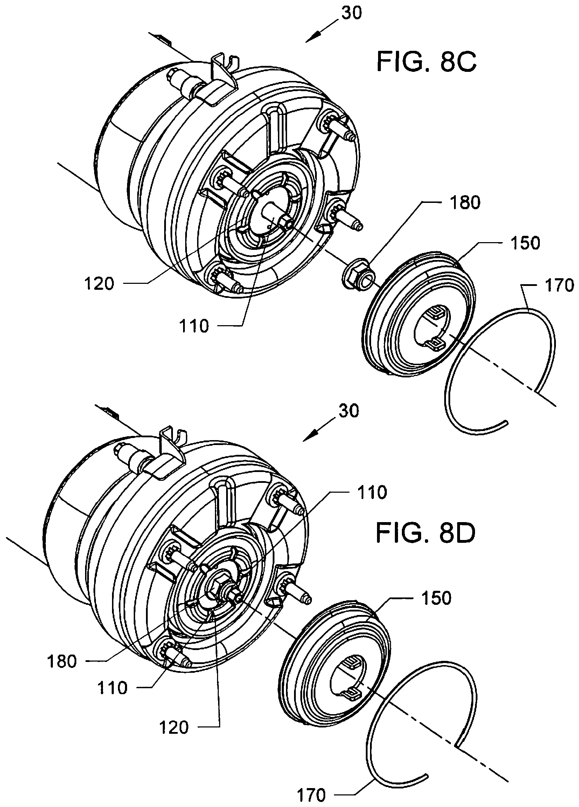

FIG. 8C is another more assembled perspective view of the main parts of the spring head of FIG. 8B with the seal pack assembly and top mount isolator within the top mount retainer plate.
FIG. 8D is another still more assembled perspective view of the of the main parts of the spring head of FIG. 8C with the shock shaft nut attached to the shock absorber shaft.

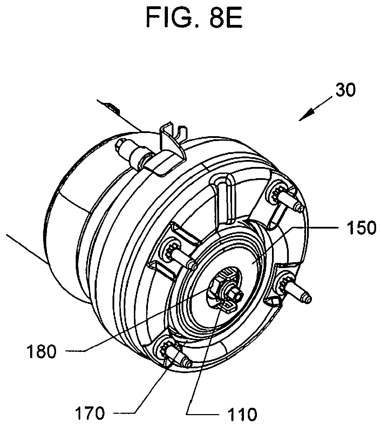

FIG. 8E is a final assembled perspective view of all the main parts of the spring head assembly of FIG. 8D with the top mount retainer plate held in place by the top mount retainer ring.

### DESCRIPTION OF THE PREFERRED EMBODIMENTS

Before explaining the disclosed embodiments of the present invention in detail it is to be understood that the invention is not limited in its applications to the details of the particular arrangements shown since the invention is capable of other embodiments. Also, the terminology used herein is for the purpose of description and not of limitation.

In the Summary above and in the Detailed Description of Preferred Embodiments and in the accompanying drawings, reference is made to particular features (including method steps) of the invention. It is to be understood that the disclosure of the invention in this specification does not include all possible combinations of such particular features. For example, where a particular feature is disclosed in the context of a particular aspect or embodiment of the invention, that feature can also be used, to the extent possible, in combination with and/or in the context of other particular aspects and embodiments of the invention, and in the invention generally.

In this section, some embodiments of the invention will be described more fully with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will convey the scope of the invention to those skilled in the art. Like numbers refer to like elements throughout, and prime notation is used to indicate similar elements in alternative embodiments.
A list of components will now be described.
- 10: Air shock assembly with top mount rod seal pack.
- 20: Air spring sub-assembly.
- 30: Air spring head.
- 40: Seal pack assembly.
- 50: Seal pack.
- 60: Seal pack X-Ring.
- 70: Seal pack O-Ring.
- 80: Seal pack retainer ring holds seal pack assembly in seal pack cup in air spring head.
- 90: Seal pack cup in air spring head.
- 100: Shock absorber.
- 110: Shock absorber shaft.
- 120: Top mount isolator consists of a metal center piece 140 that mounts to the shock shaft 110 and a rubber over-molded component 130 that rests in the retainer cup 160 in the air spring head. The rubber component is able to flex which gives some freedom of movement to the shock shaft 110 which is bolted to the center metal part 140.
- 130: Rubber component of the top mount isolator.
- 140: Steel component/metal center piece, of the top mount isolator.
- 150: Top mount retainer plate.
- 160: Top mount cup in air shock head.
- 170: Top mount retainer ring.
- 180: Shock shaft nut secures the shock shaft to the metal component of the top mount isolator.
- 190: The shock shaft can rotate and the air spring seal is maintained.
- 200: The shock shaft can oscillate axially and the air spring seal is maintained.
- 210: The shock shaft angle can shift slightly relative to the air spring head and the air spring seal is maintained.
- 220: OEM air shock assembly.
- 230: OEM air spring head.
- 240: Diaphragm seal (collapsed/installed).
- 250: Diaphragm seal (expanded).
- 260: Outside diaphragm collar.
- 270: Outside diaphragm collar retaining ring.
- 280: Inside diaphragm collar.

FIG. 4 is an upper front right perspective view of a remanufactured air shock/air spring assembly 10 with a top mount rod pack. FIG. 5A is a top view of the air shock/air spring assembly 10 of FIG. 4. FIG. 5B is a front view of the air shock/air spring assembly 10 of FIG. 4.

Referring to FIGURES 4-5B, the remanufactured air shock/air spring assembly 10 can include the prior art air spring sub-assembly 20 and shock absorber 100 and a remanufactured air spring head 30.

FIG. 5C is a cross sectional view of the air shock/air spring assembly 10 of FIG. 5A along arrows 5C. FIG. 5D is an enlarged view of a portion of the cross-sectional view of the air shock/air spring assembly 10 of FIG. 5C. FIG. 5E is an enlarged view of a portion of the air shock/air spring assembly 10 of FIG. 5D.

Referring to FIGURES 4-5E, the shock absorber shaft 110 can rotate in the direction of arrows 190 with an air spring seal at the top of the shaft 110 being maintained. The shock absorber shaft 110 can oscillate in the direction of arrows 200 with an air spring seal at the top of the shaft 110 being maintained. Additionally, the shock absorber shaft 110 can shift slightly in the direction of angles 210 relative to the air spring head 30 with an air spring seal at the top of the shaft 110 being maintained.

FIG. 6A is an exploded perspective view of the remanufactured air shock/air spring 10 of FIGURES 4-5E. FIG. 6B is a cross sectional view of the remanufactured air shock/air spring 10 of FIG. 6A along arrows 6B.

FIG. 7A is a perspective view of the seal pack assembly used in FIGURES 4-5E.

Referring to FIGURES 6A-7A, the remanufactured air shock/air spring 10 can include the air-spring sub-assembly 20, air spring head 30, a seal pack cup 90 in the air spring head 30 and the top mount cup 160, with the shock absorber shaft 110 extending out therefrom. Positioned over the outer end of the shock absorber shaft 110 can be a seal pack assembly comprising a seal pack X-ring 60, seal pack 50, seal pack O-ring 70.

A seal pack retainer ring 80 can hold the seal pack assembly 40 in the seal pack cup 90 in the air spring head 30. Covering the exposed outer end of the seal pack assembly 40 and seal pack retainer ring 80 can be the previously described top mount isolator 120. The top mount isolator 120 can include a metal center piece 140 that mounts to the shock shaft 110 and a rubber over-molded component 130 that rests in the retainer cup 160 in the air spring head 230. The rubber component 130 is able to flex which gives some freedom of movement to the shock shaft 110 which is bolted to the center metal part 140.

And above the top mount isolator 120 can be the previously described top mount retainer ring 170 with the top mount retainer plate 150 held in place by the shock shaft nut 180 which secures the shock shaft 110 to a metal component 140 at the top of the mount isolator 120. Component 140 is a steel component//metal center piece of the top mount isolator 120.

FIG. 7B is an exploded perspective view of the seal pack assembly 40 of FIG. 7A, which comprises a seal pack 50 with a seal pack X-ring 60 and a seal pack O ring 70. FIG. 7C is an opposite facing exploded perspective view of the seal pack assembly 40 of FIG. 7A showing the seal pack X-ring 60 spaced from the seal pack 50 and seal pack O-ring 70.

Referring to FIGURES 4-7C, the top mount isolator 120 comprises a metal center piece 140 that mounts to the shock shaft 110 and a rubber over-molded component 130 that rests in the retainer cup 160 in the air spring head. The rubber component is able to flex which gives some freedom of movement to the shock shaft 110 which is bolted to the center metal part 140.

To disassemble the OEM air spring shock/air spring, force is applied to top mount retainer plate 150 compressing the rubber on the top mount isolator 120 enough to allow top mount retainer ring 170 to be removed from the groove in 230. Then top mount retainer plate 150 can be removed from assembly. The nut 180 is then removed from the shock shaft 110. This allows the top mount isolator 120 to be removed from the assembly. Then the inside diaphragm collar 280 is removed from shock shaft 110 and this allows the shaft 110 to slide out of the center of the diaphragm 250. Outside diaphragm collar 260 is then removed from the OEM air spring head 230 and this allows the outside diaphragm collar 260 and the diaphragm seal 250 to be removed from OEM air spring head 230.

The assembly stages for the remanufactured air shock/air spring 10 with top mount seal pack in the air spring head 30 will be described and shown in relation to FIGURES 8A-8B.

FIG. 8A is a perspective exploded view of the main parts of air spring head 30 in the remanufactured air shock/air spring 10 ready to be assembled. Shown is the seal pack assembly 40 of FIGURES 7A-7C about to be positioned into the seal pack cup 90 within the top mount cup 160 of the open air spring head 30. Next, the seal pack retainer ring 80 is used to hold the seal pack assembly 40 in the air spring head 30. The ring 80 holds the seal pack assembly 40 in place the same way the outside diaphragm collar retaining ring 270 held the outside diaphragm collar 260 in place.

The top mount isolator 120, previously described is positioned to the right of the seal pack retainer ring 80 followed by the nut 180, top mount retainer plate 150 and top mount retainer ring 170.

FIG. 8B is a partially assembled perspective view of the main parts of the spring head 30 of FIG. 8A with the seal pack assembly 40 in the open end of the top mount isolator 120.

FIG. 8C is another more assembled perspective view of the main parts of the spring head 30 of FIG. 8B with the seal pack assembly 40 and top mount isolator 120 within the top mount retainer plate 150.

FIG. 8D is another still more assembled perspective view of the of the main parts of the spring head of FIG. 8C with the shock shaft nut 180 attached to the shock absorber shaft 110.

FIG. 8E is a final assembled perspective view of all the main parts of the spring head assembly 30 of FIG. 8D with the top mount retainer plate 150 held in place by the top mount retainer ring 170.

The top mount retainer ring 170 holds the retainer plate to the spring head assembly 30 by the ring 170 snaps into a groove in the retainer plate 230 similar to the way that the OEM parts worked.

Referring to FIG. 5D in relation to FIGURES 5C, 5E and FIGURES 6A-8D arrows 190 shows the direction the shock shaft 110 can rotate and the air spring seal is maintained. Arrows 200 shows the directions the shock shaft 110 can oscillate axially and the air spring seal is maintained. Arrows 210 shows the directions the shock shaft angle can shift slightly relative to the air spring head and the air spring seal is maintained.

The OE diaphragm 240 is not a common part that can easily be purchased and to manufacture it would be expensive. Where O-rings 60, 70 are common O-rings that can easily be purchased.

While the invention is described for application to automobile type vehicles, the invention can be used with other types of vehicles and the like.

Although specific advantages have been enumerated above, various embodiments may include some, none, or all of the enumerated advantages.

Other technical advantages may become readily apparent to one of ordinary skill in the art after review of the following figures and description.

It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Unless otherwise specifically noted, articles depicted in the drawings are not necessarily drawn to scale.

Modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

To aid the Patent Office and any readers of any patent issued on this application in interpreting the claims appended hereto, applicants wish to note that they do not intend any of the appended claims or claim elements to invoke 35 U.S.C. 112(f) unless the words "means for" or "step for" are explicitly used in the particular claim.

While the invention has been described, disclosed, illustrated and shown in various terms of certain embodiments or modifications which it has presumed in practice, the scope of the invention is not intended to be, nor should it be deemed to be, limited thereby and such other modifications or embodiments as may be suggested by the teachings herein are particularly reserved especially as they fall within the breadth and scope of the claims here appended.

## Claims

1. A remanufactured air shock comprising:
a top mount assembly having an outer end and an inner end;
an air spring sub-assembly attached to the inner end of the top mount assembly;
a shock absorber damper rod shaft having a lower end in the air spring sub-assembly and an upper end moveable within the top mount assembly; and
a seal pack that keeps compressed air from leaking from the air shock while allowing the damper rod shaft to move axially and rotationally in the top mount assembly.

2. The remanufactured air shock of claim 1, wherein the seal pack includes:
a seal pack with an outer groove;
a seal pack X-ring for fitting inside of the seal pack; and
an O-ring for fitting into the outer groove of the seal pack.

3. A method of remanufacturing an OEM (original equipment manufacturer) air shock, comprising the steps of:
providing a top mount assembly having an outer end and an inner end;
providing an air spring sub-assembly attached to the inner end of the top mount assembly;
providing a shock absorber damper rod shaft having a lower end in the air spring sub-assembly and an upper end moveable within the top mount assembly; and
keeping compressed air from leaking from the air shock while allowing the damper rod shaft to move in the top mount assembly.

4. The method of claim 3, wherein the step of keeping the compressed air from leaking includes the step of:
providing a seal pack that keeps the compressed air from leaking from the air shock while allowing the damper rod shaft to move axially in the top mount assembly.

5. The method of claim 3, wherein the step of keeping the compressed air from leaking includes the step of:
providing a seal pack that keeps the compressed air from leaking from the air shock while allowing the damper rod shaft to move rotationally in the top mount assembly.

6. The method of claim 3, wherein the step of keeping the compressed air from leaking includes the step of:
providing a seal pack that keeps the compressed air from leaking from the air shock while allowing the damper rod shaft to shift side to side in the top mount assembly.

7. The method of claim 3, wherein the step of keeping the compressed air from leaking includes the step of:
providing a seal pack that keeps the compressed air from leaking from the air shock while allowing the damper rod shaft to move axially in the top mount assembly, and while allowing the damper rod shaft to move rotationally in the top mount assembly, and while allowing the damper rod shaft to shift side to side in the top mount assembly.

8. The method of claim 4, wherein the step of providing the seal pack includes the steps of:
providing a seal pack with an outer groove;
providing a seal pack X-ring for fitting inside of the seal pack; and
providing an O-ring for fitting into the outer groove of the seal pack.

9. The method of claim 5, wherein the step of providing the seal pack includes the steps of:
providing a seal pack with an outer groove;
providing a seal pack X-ring for fitting inside of the seal pack; and
providing an O-ring for fitting into the outer groove of the seal pack.

10. The method of claim 6, wherein the step of providing the seal pack includes the steps of:
providing a seal pack with an outer groove;
providing a seal pack X-ring for fitting inside of the seal pack; and
providing an O-ring for fitting into the outer groove of the seal pack.

11. The method of claim 7, wherein the step of providing the seal pack includes the steps of:
providing a seal pack with an outer groove;
providing a seal pack X-ring for fitting inside of the seal pack; and
providing an O-ring for fitting into the outer groove of the seal pack.

12. The method of claim 3, wherein the step of keeping compressed air from leaking from the air shock while allowing the damper rod shaft to move in the top mount assembly, includes the step of:
preventing compressed air from leaking from the air shock
while allowing the damper rod shaft to move axially in the top mount assembly, and while allowing the damper rod shaft to move rotationally in the top mount assembly, and while allowing the damper rod shaft to shift side to side in the top mount assembly.

13. The method of claim 3, further comprising the step of:
disassembling the OEM (original equipment manufacturer) air shock as a first step.

14. A remanufactured air spring for vehicles comprising:
a top mount with an outer end and an inner end;
an air spring assembly attached to the inner end of the top mount;
a shock absorber damper rod shaft having a lower end in the air spring sub-assembly and an upper end moveable inside of the top mount; and
a seal pack that keeps compressed air from leaking from the air spring while allowing the damper rod shaft to move axially and rotationally and side to side in the top mount.

15. The remanufactured air spring of claim 14, wherein the seal pack includes:
a seal pack with an outer groove;
a seal pack X-ring for fitting inside of the seal pack; and
an O-ring for fitting into the outer groove of the seal pack.
